# EUROPÄISCHE PATENTANMELDUNG

(11) **EP 1 153 779 A2**
(43) Veröffentlichungstag der Anmeldung: **14.11.2001**
(21) Anmeldenummer: 01111044.2
(22) Anmeldetag: 08.05.2001
(51) Int. Cl.: B60J 5/04, B62D 33/04, E05D 3/06

(54) **Schüttgutabweiser für den Türspalt einer Laderaumtür**

(30) Priorität: 13.05.2000 DE 20008656 U
(71) Anmelder: PWP SA, CH-1530 Payerne (CH)
(72) Erfinder: Schäfer, Götz, 1530 Payerne (CH)
(74) Vertreter: Müller, Enno, Dipl.-Ing.

(57) **Zusammenfassung**

Die Erfindung betrifft eine Laderaumtür an einem Kastenaufbau eines Lastkraftwagens mit einer dem Laderaum in Verschlussposition zugewandten Innenwand, einer Außenwand und Stirnwänden, wobei die Laderaumtür an einer Stirnwand einer anschließenden Laderaumtür oder einer Runge, ggf. unter Scharnierverbindung, jedenfalls aber unter Ausbildung eines ggf. dichtungsverschlossenen Türspalts angeordnet ist, und schlägt zur Vermeidung des Eindringens von Fremdkörpern, insbesondere von Schüttgut, aus dem Laderaum in einen Türspalt vor, dass an der Innenwand (20) der Laderaumtür (3) eine den Türspalt (39) übergreifende und einen Teilbereich der weiteren Laderaumtür (4) oder der Runge überdeckende Übergreifwand (9) befestigt ist.

## Beschreibung

Die Erfindung betrifft eine Laderaumtür an einem Kastenaufbau eines Lastkraftwagens, mit einer dem Laderaum in Verschlussposition zugewandten Innenwand, einer Außenwand und Stirnwänden, wobei die Laderaumtür an einer Stirnwand einer anschließenden Laderaumtür oder einer Runge, ggf. unter Scharnierverbindung, jedenfalls aber unter Ausbildung eines ggf. dichtungsverschlossenen Türspalts angeordnet ist.

Eine gattungsgemäße Laderaumtür ist aus der EP 0 976 594 A 1 bekannt. Insbesondere sind daraus auch Laderaumtüren bekannt, die aus benachbarten, durch eine Scharnierverbindung gelenkig verbundenen Türflügeln gebildet sind, wobei im Sinne der vorliegenden Erfindung auch ein Türflügel als Laderaumtür bezeichnet wird. Im Hinblick auf die gewünschte Beweglichkeit der Laderaumtüren ist zwischen den aneinander grenzenden Rändern benachbarter Laderaumtüren bzw. zwischen dem Rand einer Laderaumtür und einer benachbarten Runge ein Türspalt gebildet, welcher bei den in der vorbezeichneten Anmeldung beschriebenen Laderaumtüren mittels einer Dichtung verschlossen wird. Derartige Laderaumtüren verbinden durch ihre vielfältigen Öffnungsmöglichkeiten die Vorteile einer großen Variabilität und zugleich einer wirksamen Abdichtung des Kastenaufbaues und zeichnen sich daher durch vielfältige Einsatzmöglichkeiten aus. Unter anderem werden derartige Laderaumtüren an einem Kastenaufbau auch zum Transport von Schüttgut, d. h. für sog. Losetransporte, verwendet. Das Schüttgut füllt dabei auch den nicht von einem ggf. vorgesehenen Dichtelement ausgefüllte Türspalt aus, wodurch es zu einem Kontakt des Schüttgutes mit dem Dichtelement und dadurch zu einer stärkeren Beanspruchung des Dichtelementes kommt. Zum anderen beeinflusst das in ggf. mehrere Türspalte eindringende Schüttgut die Entladezeit, insbesondere wenn bei einem Entladevorgang nicht sämtliche Laderaumtüren geöffnet sind.

Der Erfindung liegt daher die Aufgabe zugrunde, eine gattungsgemäße Laderaumtür in der Weise weiterzubilden, dass ein Eindringen von Fremdkörpern, insbesondere von Schüttgut, aus dem Laderaum in einen Türspalt vermieden wird, so dass insbesondere eine Verkürzung von Entladezeiten und eine geringere Beanspruchung eines ggf. im Türspalt angeordneten Dichtelementes ermöglicht werden.

Gelöst ist die Aufgabe zunächst und im Wesentlichen durch den Gegenstand von Anspruch 1, zu dem vorteilhafte Weiterbildungen in den folgenden Unteransprüchen angegeben werden. Nach Anspruch 1 wird darauf abgestellt, dass an der Innenwand der Laderaumtür eine den Türspalt übergreifende und einen Teilbereich der weiteren Laderaumtür oder der Runge überdeckende Übergreifwand befestigt ist. Insbesondere ist dabei daran gedacht, dass in einem Verschlusszustand der Laderaumtür die Übergreifwand den Türspalt übergreift und einen Teilbereich der weiteren Laderaumtür oder der Runge überdeckt. Erfindungsgemäß wird dadurch ein Schutz des Türspaltes bzw. des Dichtungsbereiches zum Ladegut hin erreicht, so dass ein Eindringen von Schüttgut in den Türspalt verhindert ist. Besonders bei Schüttgut - bzw. Loseguttransporten und in Verbindung mit Schubboden- oder Kippfahrzeugen wird dadurch ein geringerer Verschleiß im Dichtungsbereich erreicht. Darüber hinaus werden im Bereich von Türspalten Fugen vermieden, so dass sich beim Entladen als weiterer Vorteil eine Reduktion der Entladezeiten ergibt. Die vorgenannten Vorteile werden insbesondere auch dann erreicht, wenn die Scharnierverbindung in einer bevorzugten Ausführungsform ein um zwei Drehachsen drehbares Scharnierteil aufweist, womit sich die Laderaumtür problemlos auch um besonders große Öffnungswinkel öffnen lässt, andererseits aber zur ungehinderten Beweglichkeit wiederum ein Türspalt zweckmäßig ist. Hinsichtlich möglicher Ausgestaltungen einer Laderaumtür mit einem um zwei Drehachsen drehbaren Scharnierteil wird Bezug auf die EP 0 976 594 A1 und die EP 0 698 515 A2 genommen. Diese werden zudem vollinhaltlich mit in die vorliegende Anmeldung aufgenommen, dies auch zu dem Zweck, Merkmale daraus mit in Ansprüche der vorliegenden Anmeldung aufzunehmen. Bei der erfindungsgemäßen Laderaumtür ist bevorzugt daran gedacht, dass die Übergreifwand als Strangprofil, insbesondere als Strangpressprofil aus einem Aluminum-Werkstoff ausgebildet ist. In einer zweckmäßigen Weiterbildung kann vorgesehen sein, dass die Übergreifwand in einem zu einer Haupterstreckungsrichtung senkrechten Querschnitt einen Fortsatz aufweist, der formschlüssig, insbesondere schwalbenschwanzartig, in eine Ausnehmung an der Laderaumtür eingreift. Alternativ zu einem schwalbenschwanzartigen Eingriff kann beispielsweise auch ein Eingriff durch einen im Querschnitt T-förmig gebildeten Steg verwirklicht sein. Zum einen wird durch den Eingriff eine hochbeanspruchbare Verbindung zwischen der Laderaumtür und der Übergreifwand erreicht, zum anderen kann eine einfache Montage in der Weise erfolgen, dass die Übergreifwand mit dem Fortsatz von einer Stirnseite der Ausnehmung in diese eingeführt wird. Es besteht auch die Möglichkeit, dass die Laderaumtür ein Randprofil aufweist und dass die Ausnehmung, in welche der Fortsatz eingreift, an dem Randprofil ausgebildet ist. Zu zweckmäßigen Ausgestaltungen des Randprofils der Laderaumtür, das vorzugsweise als Strangpressprofil aus einem Aluminum-Werkstoff ausgebildet ist, wird ebenfalls Bezug auf die EP 0 976 594 A1 und die EP 0 698 515 A 2 genommen.

Alternativ zu einer Ausgestaltung der Übergreifwand als an der Laderaumtür befestigtes Einzelteil kann auch vorgesehen sein, dass die Übergreifwand einstückig mit der Laderaumtür bzw. mit einem Randprofil derselben ausgebildet ist. Demgegenüber ist bei einer als Einzelteil ausgebildeten, an der Laderaumtür zu befestigenden Übergreifwand bevorzugt vorgesehen, dass die Übergreifwand einen Befestigungsabschnitt aufweist, der sich im Wesentlichen flächenparallel zu einem Bereich der Innenwand der Laderaumtür erstreckt. Der Befestigungsabschnitt kann dabei an der Innenwand der Laderaumtür mit einem oder mehreren Befestigungselementen wie einer Schraube, einer Niete oder dergleichen oder durch eine Verklebung, Verschweißung oder dergleichen befestigt sein.

Des Weiteren besteht die Möglichkeit, das an der anschließenden Laderaumtür eine weitere Innenwand und ein weiteres Randprofil, das vorzugsweise als Strangpressprofil aus einem Aluminium-Werkstoff ausgebildet ist, vorgesehen sind. Weiter kann auch im Hinblick auf eine der Laderaumtür benachbarte Runge eine weitere Innenwand vorgesehen sein. Jeweils im Hinblick darauf kann vorgesehen sein, dass die Übergreifwand einen Überdekkungsabschnitt aufweist, durch den in einem Verschlusszustand der Laderaumtür zumindest eine bereichsweise Überdeckung der weiteren Innenwand gegeben ist. In einem zu dem Außenrand der Laderaumtür, bzw. zu der Längserstreckungsrichtung der Übergreifwand senkrechten Querschnitt kann damit in einer zweckmäßigen Ausgestaltung insgesamt auch eine im Wesentlichen T-förmige Querschnittsform der Übergreifwand verwirklicht sein.

Ein besonders wirksamer Schutz eines Türspaltes und eines ggf. darin angeordneten Dichtelementes gegen eindringendes Schüttgut wird insbesondere dadurch erreicht, dass in einem Verschlusszustand der Laderaumtür eine Anlage des Überdeckungsabschnittes an der weiteren Innenwand gegeben ist. Bevorzugt kann dazu an dem Überdeckungsabschnitt eine Anlageleiste angeordnet sein, welche vorzugsweise aus einem Kunststoff-Werkstoff, wie beispielsweise Polyamid, ausgebildet ist. Die Anlageleiste kann ihrerseits bevorzugt ein Strangprofil sein, das beispielsweise in einer in dem Überdeckungsabschnitt ausgebildeten Befestigungsnut gehalten ist. Die Befestigungsnut kann zweckmäßig in einem Bereich des Überdeckungsabschnittes ausgebildet sein, welcher in einem Verschlusszustand der Laderaumtür der Innenwand einer benachbarten Laderaumtür bzw. einer Runge zugewandt ist, so dass in dem Verschlusszustand der Laderaumtür eine Anlage der Anlageleiste an der weiteren Innenwand gegeben ist. Bezüglich der Anlageleiste wird zu möglichen Ausführungsformen, Befestigungsmöglichkeiten, Vorteilen und dergleichen auch auf die G 88 16 879.4 verwiesen. Diese wird vollinhaltlich mit in die vorliegende Anmeldung aufgenommen, auch zu dem Zweck, um daraus Merkmale mit in die Ansprüche vorliegender Anmeldung aufzunehmen. Bei einer Ausgestaltung der Übergreifwand, bei der in einem Verschlusszustand der Laderaumtür eine Anlage des Überdeckungsabschnittes, entweder unmittelbar oder mittelbar mit einer Anlageleiste, an der weiteren Innenwand einer benachbarten Laderaumtür bzw. einer benachbarten Runge gegeben ist, ergibt sich als weiterer Vorteil der erfindungsgemäßen Übergreifwand eine zusätzliche Abstützung der Laderaumtür. Es wird dadurch ein Innendruck, der bspw. infolge einer ungleichmäßigen Verteilung von Schüttgut in einem Kastenaufbau ungleichmäßig auf benachbarte Laderaumtüren bzw. auf eine Laderaumtür und eine benachbarte Runge wirkt, vergleichmäßigt, so dass Lastspitzen vermieden und durch eine geringere Maximalbeanspruchung eine größere Lebensdauer der Komponenten erreicht werden kann. Durch die Abstützung des Überdeckungsabschnittes bzw. der Anlageleiste an der weiteren Innenwand werden außerdem benachbarte Türflügel bzw. Laderaumtüren zueinander ausgerichtet, d. h. eingeebnet, so dass praktisch keine Fugen mehr vorhanden sind, was wiederum zu einer Reduktion von Entladezeiten führt. Des Weiteren wird bei einem Türspalt mit einer Scharnierverbindung durch die Anlage bzw. Abstützung eine wesentliche Entlastung der Scharnierglieder erreicht, so dass auch diesbezüglich eine höhere Lebensdauer erreichbar ist. Gemäß einer weiter bevorzugten Ausführungsform der Übergreifwand kann der Befestigungsabschnitt und/oder der Überdeckungsabschnitt in einem zu der Längserstreckungsrichtung der Übergreifwand senkrechten Querschnitt in der Gestalt eines Steges mit einer Stegbreite und mit einer Steglänge ausgebildet sein, wobei die Steglänge ein Mehrfaches der Stegbreite betragen kann und/oder die Stegbreite vorzugsweise in der Größenordnung von wenigen Millimetern liegen kann. Sofern in dem Türspalt ein Dichtelement angeordnet ist, kann dieses vorzugsweise an dem Randprofil der Laderaumtür befestigt sein.

In Verbindung mit einer Scharnierverbindung der Laderaumtür, die ein um zwei Drehachsen drehbares Scharnierteil aufweist, erweist sich die erfindungsgemäße Übergreifwand besonders dann als vorteilhaft, wenn während eines Öffnungs- bzw. Schließvorganges der Laderaumtür jeweils eine bestimmte Verdrehfolge um die beiden Drehachsen eingehalten wird. Im Hinblick darauf kann die erfindungsgemäße Laderaumtür in der Weise weitergebildet sein, dass daran im Bereich einer scharnierseitigen Stirnwand ein Nocken angeordnet ist und dass der Nocken eine Randfläche aufweist, welche in einer zu der scharnierseitigen Stirnwand senkrechten Richtung über die scharnierseitige Stirnwand übersteht. In diesem Zusammenhang ist weiter bevorzugt, dass an dem Kastenaufbau in einem Randbereich der Türöffnung eine Anlage- bzw. Führungsfläche ausgebildet ist und dass bei bestimmten Paarungen bzw. Kombinationen von Verdrehwinkeln des Scharniergliedes um die beiden Drehachsen eine Anlage der Randfläche des Nockens an der Führungsfläche gegeben ist. Die Anlage des Nockens erfolgt dabei bevorzugt als eine drehbare und verschiebliche Anlage, so dass die Anlage zwischen Nocken- und Anlage- bzw. Führungsfläche gemeinsam mit den beiden Drehachsen in einer dazu senkrechten Ebene ein Dreigelenk bildet. Insbesondere bei einer Verschließbewegung der Laderaumtür kommt dadurch dem Nocken eine Bedeutung als Einweisungselement der Laderaumtür zu, wie dies in weiterer Einzelheit insbesondere auch der hiermit vollinhaltlich in die vorliegende Anmeldung mit aufgenommenen EP 0 976 594 A1 zu entnehmen ist. Zur Erzielung einer bestimmten Verdrehfolge des Scharniergliedes der Laderaumtür um die beiden Drehachsen kann in einer weiter bevorzugten Ausgestaltung vorgesehen sein, dass an der Laderaumtür drehbar ein sich in Richtung einer türseitigen Drehachse erstreckender und drehsteif mit dem Scharnierglied verbundener Achskörper angeordnet ist, welcher einen unrunden Querschnitt aufweist und an einem türseitig befestigten Federelement anliegt, wobei das Federelement durch den Achskörper eine von einem Drehwinkel zwischen dem Achskörper und der Laderaumtür abhängige Verformung erfährt. Bevorzugt ist dabei daran gedacht, dass das Federelement als Flachfeder mit einer Flachseite ausgebildet ist, und dass es mit der Flachseite an dem Achskörper anliegt, wobei auch bezüglich möglicher Ausgestaltungen des Achskörpers und des Federelementes auf die vollinhaltlich in die vorliegende Anmeldung einbezogene Offenbarung der EP 0 976 594 A1 verwiesen wird. Während es sich bei der einen Drehachse des Scharnierteils bzw. Scharnierglieds um eine laderaumtürseitige Drehachse handelt, ist die andere, vorzugsweise parallel beabstandete Drehachse einer benachbarten Laderaumtür, einer benachbarten Runge oder allgemein einem an die Laderaumtür angrenzenden Bestandteil des Kastenaufbaus zugeordnet. Insbesondere bei einer Laderaumtür, welche sowohl einen vorstehend beschriebenen Nocken, wie auch einen unrunden Achskörper mit einem türseitig befestigten Federelement aufweist, wird bei einem Öffnungs- bzw. Schließvorgang eine jeweils zweckmäßige Verdrehfolge des Scharnierteils um die beiden Drehachsen eingehalten, durch welche eine schonende Ausrichtung bzw. Anlage der Übergreifwand an der der Laderaumtür benachbarten Laderaumtür bzw. der benachbarten Runge ohne die Gefahr von Beschädigungen gewährleistet wird.

Nachfolgend wird die Erfindung anhand der beigefügten Zeichnungen, welche bevorzugte Ausführungsformen darstellen, näher erläutert. Dabei zeigt:
- Fig. 1: eine Draufsicht auf erfindungsgemäße Laderaumtüren an einem Kastenaufbau eines Lastkraftwagens,
- Fig. 2a bis 7a: jeweils einen Teilschnitt entlang der Schnittlinie VIIa-VIIa in Fig. 1, wobei die einzelnen Figuren verschiedene Schließstellungen einer Laderaumtür während eines Schließvorganges zeigen und Fig. 7a der in Fig. 1 gezeigten Schließstellung entspricht,
- Fig. 2b bis 7b: jeweils einen Teilschnitt entlang der Schnittlinie VIIb-VIIb in Fig. 1, wobei die einzelnen Figuren jeweils den Figuren 2a bis 7a bezüglich der Verdrehlage entsprechende Schließstellungen zeigen,
- Fig. 8a bis 11a: jeweils einen Teilschnitt entlang der Schnittlinie VIIa-VIIa in Fig. 1, wobei die einzelnen Figuren verschiedene Öffnungsstellungen einer Laderaumtür während eines Öffnungsvorganges zeigen und
- Fig. 8b bis 11b: jeweils einen Teilschnitt entlang der Schnittlinie VIIb-VIIb in Fig. 1, wobei die einzelnen Figuren jeweils den Fig. 8a bis 11a bezüglich der Verdrehlage entsprechende Öffnungsstellungen einer Laderaumtür zeigen.

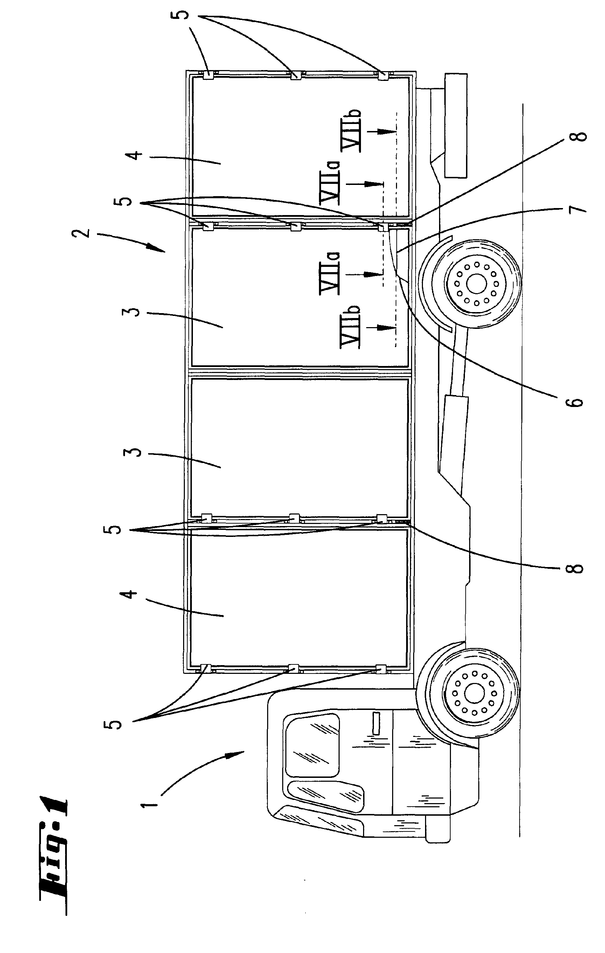

Fig 1 zeigt in einer Seitenansicht einen Lastkraftwagen 1 mit einem Kastenaufbau 2, welcher an der in Draufsicht dargestellten Seitenfläche Laderaumtüren 3, 4 aufweist. Jeweils eine Laderaumtür 3 und eine benachbarte Laderaumtür 4 bilden ein Türflügelpaar. Eine Laderaumtür 4 ist mit einer Scharnierverbindung, welche um zwei Drehachsen drehbare Scharnierteile 5 aufweist, an eine nicht näher zeichnerisch dargestellten Runge des Kastenaufbaus 2 drehbar angelenkt. Eine Laderaumtür 3 ist ihrerseits an einer benachbarten Laderaumtür 4 mit drei Scharnierteilen 5 drehbar angelenkt. In dem dargestellten Ausführungsbeispiel weist dabei eine Scharnierverbindung jeweils drei Scharnierteile 5 auf, die jeweils um zwei parallel beabstandete Achsen drehbar sind. Die beiden Paare von Laderaumtüren 3, 4 sind in dem gezeichneten Ausführungsbeispiel hinsichtlich ihrer Scharnierverbindung, d. h. hinsichtlich ihrer Verschwenkbarkeit, zueinander achsensymmetrisch bezüglich einer senkrecht zwischen den Laderaumtüren 3 verlaufenden Bezugslinie ausgebildet. Zur Vereinfachung der Darstellung sind in Fig. 1 keine Verriegelungs- und Betätigungselemente der Laderaumtüren 3, 4 zeichnerisch wiedergegeben. An den dargestellten Laderaumtüren 3, 4 können jedoch in herkömmlicher Weise bekannte Verriegelungs- und/oder Betätigungselemente Verwendung finden, insbesondere wird dazu auf die aus der EP 0 698 515 A 2 und der EP 0 976 594 A 1 bekannten Verriegelungs- und Betätigungselemente verwiesen. Wie dies in den nachfolgenden Figuren angedeutet ist, ist bei dem in Fig. 1 dargestellten Kastenaufbau 2 zumindest an eine Verriegelung der Laderaumtüren 3 im Bereich der Scharnierverbindung zu den benachbarten Laderaumtüren 4 gedacht. Darüber hinaus können auch die Laderaumtüren 4 an dem Kastenaufbau 2 verriegelt werden. Die einander zuweisenden, scharnierabgewandten Ränder der Laderaumtüren 3 wirken dichtend zusammen. Insgesamt besteht also die Möglichkeit, durch Aufklappen beider Türflügelpaare eine sich über die gesamte Länge des Kastenaufbaus 2 hinweg erstreckende Be- und Entladeöffnung bereitzustellen. Mittels eines zeichnerischen Aufbruches 6 der Laderaumtür 3 ist weiter ein Höhenverlauf eines Ladebodens 7 des Kastenaufbaus 2 dargestellt. In einer starken Vereinfachung sind der Fig. 1 darüber hinaus auch die Anordnung von Nocken 8 im jeweils einer Laderaumtür 4 zugewandten, scharnierseitigen Randbereich der Laderaumtüren 3 zu entnehmen.

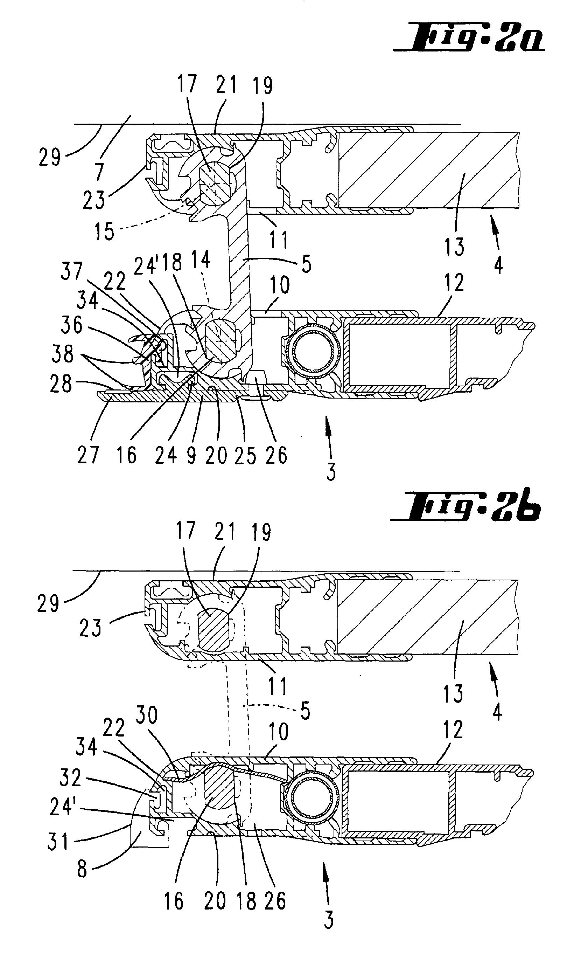

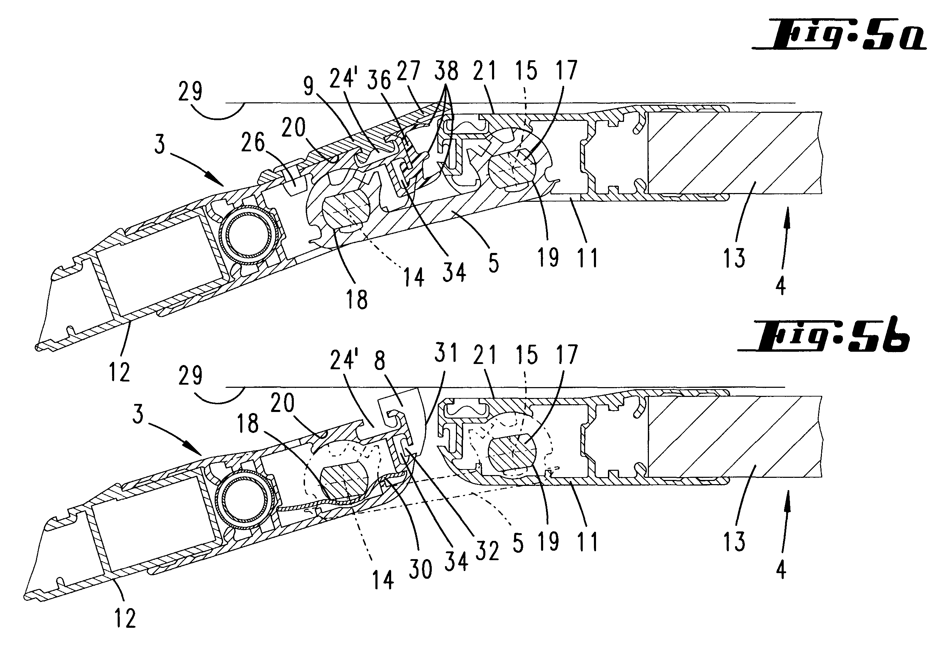

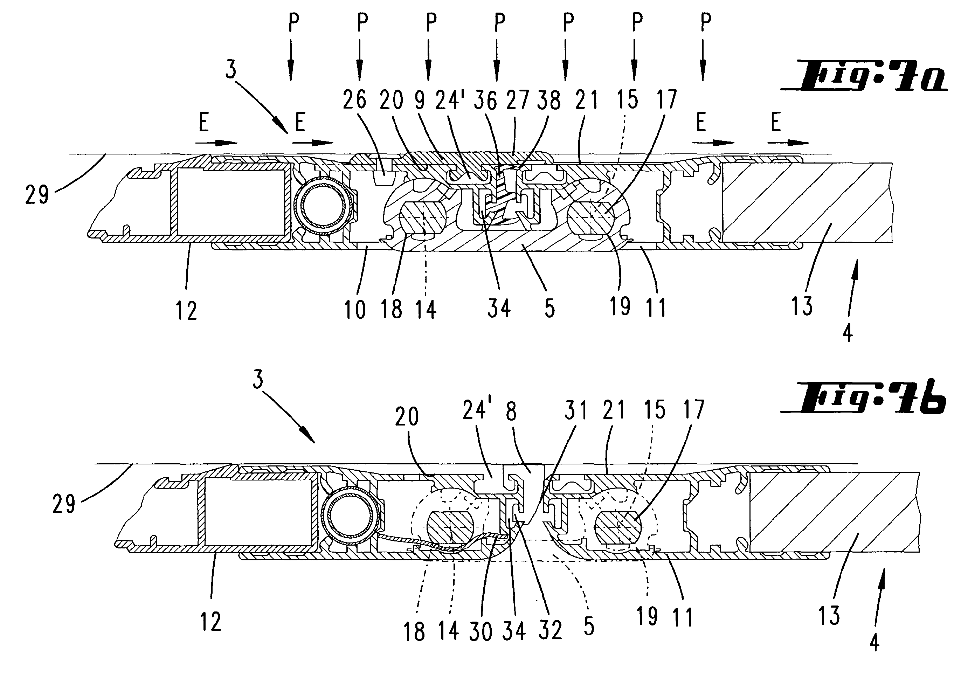

Die Fig. 2a bis 7a zeigen jeweils einen Teilschnitt durch Laderaumtüren 3, 4 entlang der Schnittlinie VIIa-VIIa in Fig. 1, wobei die Schnittlinie auf Höhe eines Scharnierteils 5 verläuft. Die vorgenannten Figuren zeigen jeweils verschiedene Schließstellungen einer Laderaumtür 3, wobei beginnend von Fig. 2a bis Fig. 7a ein Schließvorgang der Laderaumtür 3 dargestellt ist und die in Fig.7a gezeichnete Schließstellung zugleich der in Fig. 1 dargestellten Position der Laderaumtür 3 entspricht. Wie in weiterer Einzelheit zunächst den Fig. 2a und 2b, welche eine mit einem Drehwinkel von 180° geöffnete Laderaumtür 3 zeigen, zu entnehmen ist, weisen die Laderaumtüren 3, 4 jeweils ein Randprofil 10, 11 auf, an das sich ein Türblatt 12, 13 anschließt. Das Scharnierteil 5 ist um zwei parallele Drehachsen 14, 15 drehbar, von denen die Drehachse 14 der Laderaumtür 3 und die Drehachse 15 der benachbarten Laderaumtür 4 zugeordnet sind. In dem gezeigten Ausführungsbeispiel erstrecken sich entlang der Drehachsen 14, 15 Achskörper 16, 17 mit jeweils einem unrunden Querschnitt, welche in Verdrehrichtung formschlüssig mit ebenfalls unrunden Ausnehmungen 18, 19 in dem Scharnierglied 5 zusammenwirken. Bezüglich der in den Fig. 7a und 7b dargestellten Verschlussstellung weisen die Laderaumtüren 3 und 4 dem Laderaum zugewandte Innenwände 20 und 21 sowie scharnierseitige Stirnwände 22 und 23 auf. Wieder mit Bezug auf Fig. 2a ist des Weiteren dargestellt, dass an der Innenwand 20 eine Übergreifwand 9 befestigt ist. Diese ist als Strangpressprofil aus einem Aluminium-Werkstoff ausgebildet. In dem in Fig. 2a dargestellten Querschnitt weist die Übergreifwand 9 einen Fortsatz 24 auf, welcher schwalbenschwanzartig in eine Ausnehmung 24' in dem Randprofil 10 eingreift. Des Weiteren weist die Übergreifwand 9 einen Befestigungsabschnitt 25 auf, an welchem sie mit einer Niete 26 an der Innenwand 20 des Randprofils 10 befestigt ist. Die Übergreifwand 9 weist bei einer insgesamt im Wesentlichen T-förmigen Ausgestaltung des Weiteren einen Überdeckungsabschnitt 27 auf. Dieser besitzt eine Ausnehmung, in welcher eine als Strangprofil ausgebildete Anlageleiste 28 aus Polyamid eingesetzt und darin gehalten ist. Die Übergreifwand 9 und die Anlageleiste 28 erstrecken sich senkrecht zur Zeichenebene durchgehend und im Wesentlichen über die gesamte Längserstreckung des scharnierseitigen Randes der Laderaumtür 3 hinweg. In dem gezeigten Ausführungsbeispiel (jedoch nicht notwendigerweise) sind von der Erstreckung der Übergreifwand 9 und der Anlageleiste 28 lediglich die Bereiche ausgenommen, in denen eine Überlappung des Randprofils 10 mit einer Anlage- bzw. Führungsfläche 29 in einem unteren (vgl. Fig. 2b) und oberen Randbereich der Türöffnung des Kastenaufbaus 2 gegeben ist. Je nach Ausgestaltung besteht davon abweichend auch die Möglichkeit, dass sich die Übergreifwand 9 und/oder die Anlageleiste 28 durchgehend über die gesamte Höhe des Randprofils 10 bzw. des scharnierseitigen Randes der Laderaumtür 3 erstrecken. Weiter ist in Fig. 2a anhand der nur bereichsweisen Schraffur der Randprofile 10, 11 zu erkennen, dass die Randprofile 10, 11 in einem auf das darin eingesetzte Scharnierteil 5 abgestimmten Längenbereich Ausnehmungen aufweisen, durch welche die Verdrehbarkeit des Profilteils 5 in dem gewünschten Drehwinkelbereich ermöglicht wird. Dazu wird insbesondere auch auf die diesbezügliche Offenbarung der EP 0 976 594 A 1 verwiesen.

Wie sich dies in Verbindung mit der in einer anderen Schnittebene liegenden Fig. 2b ergibt, erstrecken sich die unrunden Achskörper 16, 17 auch unterseitig und auch oberseitig (zeichnerisch nicht wiedergegeben) über das Scharnierteil 5 hinaus. Zusätzlich zu einer, ebenfalls zeichnerisch nicht wiedergegebenen, Führungsaufnahme der Achskörper in den Randprofilen ist dabei bei dem gezeigten Ausführungsbeispiel eine Anlage des Achskörpers 16 an eine Flachfeder 30 vorgesehen, wobei die Flachfeder in dem Randprofil 10 verliersicher gehalten und an ihren beiden Längsenden abgestützt ist. Dabei ist in jeder Verdrehlage des Achskörpers 16 eine gewisse Vorspannung der Flachfeder 30 wirksam, die in der in Fig. 2b gezeigten Verdrehlage ihr Maximum und in der in Fig. 7b gezeigten Drehlage des Achskörpers 16 ihr Minimum erreicht. Der Fig. 2b ist weiter zu entnehmen, dass an der Laderaumtür 3 im Bereich der scharnierseitigen Stirnwand 22 ein Nocken 8 angeordnet ist und dass der Nocken eine Randfläche 31 aufweist, welche in einer zu der scharnierseitigen Stirnwand 22 senkrechten Richtung über die Stirnwand 22 übersteht. Wie dies Fig. 1 zu entnehmen ist, verläuft die Schnittlinie VIIb-VIIb, welche die Schnittebene der Fig. 2b bis 11b bestimmt, unmittelbar oberhalb des Ladebodens und bezüglich der Laderaumtür 3 zwischen einem unteren Ende der Übergreifwand 9 und einem oberen Ende eines daran angrenzenden Nockens 8. Dementsprechend wurde das Scharnierteil 5 in den Fig. 2b bis 11b in gestrichelter Linie auch nur zur Veranschaulichung eingezeichnet. Der Nocken 8 greift in dem Querschnitt der Zeichnungsebene formschlüssig mit Vorsprüngen 32, 33 in zugeordnete Ausnehmungen 34, 35 des Randprofils 10. Wie aus einem Vergleich der Fig. 2a und 2b deutlich wird, erstreckt sich der Nocken 8 in dem gezeichneten Ausführungsbeispiel in demjenigen unteren Längenabschnitt des Randprofils 10, in dem eine Überlappung mit der Führungsfläche 29 seitlich unterhalb des Laderaumbodens 7 erfolgt. Alternativ oder kombinativ kann ein Nocken 8 in einem oberen Überlappungsbereich (oberhalb der Türöffnung) vorgesehen sein, je nach Ausgestaltung ist darüber hinaus auch eine durchgehende Anordnung denkbar. Wie sich aus den Fig. 2a und 2b des Weiteren ergibt, ist zwischen den vorgenannten Überlappungsbereichen ein Dichtelement 36 an der scharnierseitigen Stirnwand 22 befestigt. Dieses greift mit einem Fortsatz 37 formschlüssig in die Ausnehmung 34 ein. In dem gezeigten Ausführungsbeispiel weist das Dichtelement 36 drei Dichtlippen 38 auf, welche sich im Verschlusszustand der Laderaumtüren über einen Türspalt 39 hinweg erstrecken, wobei eine dichtende Anlage gegen die scharnierseitige Stirnwand 23 der weiteren Laderaumtür 4 erfolgt.

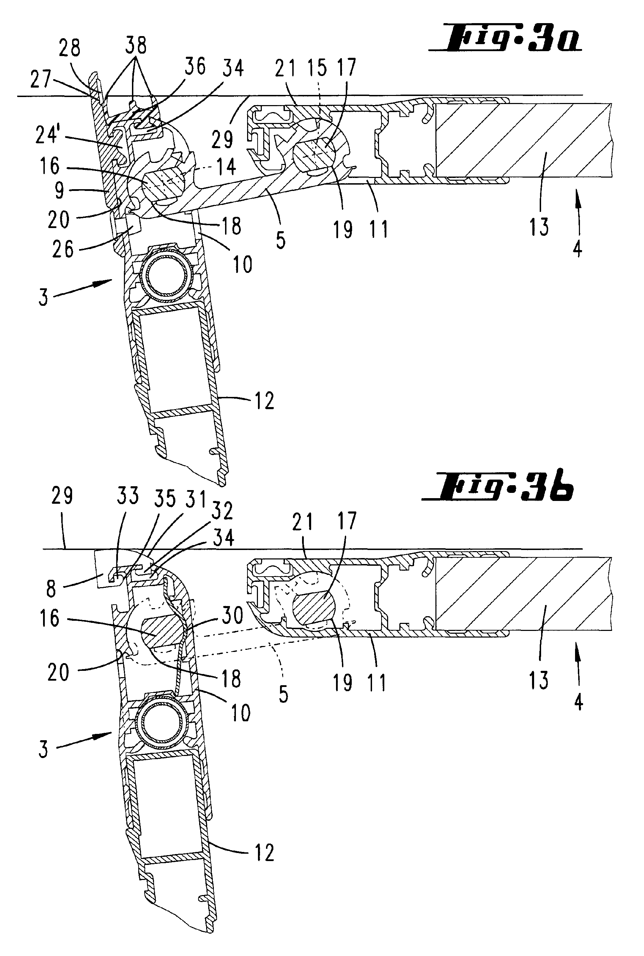

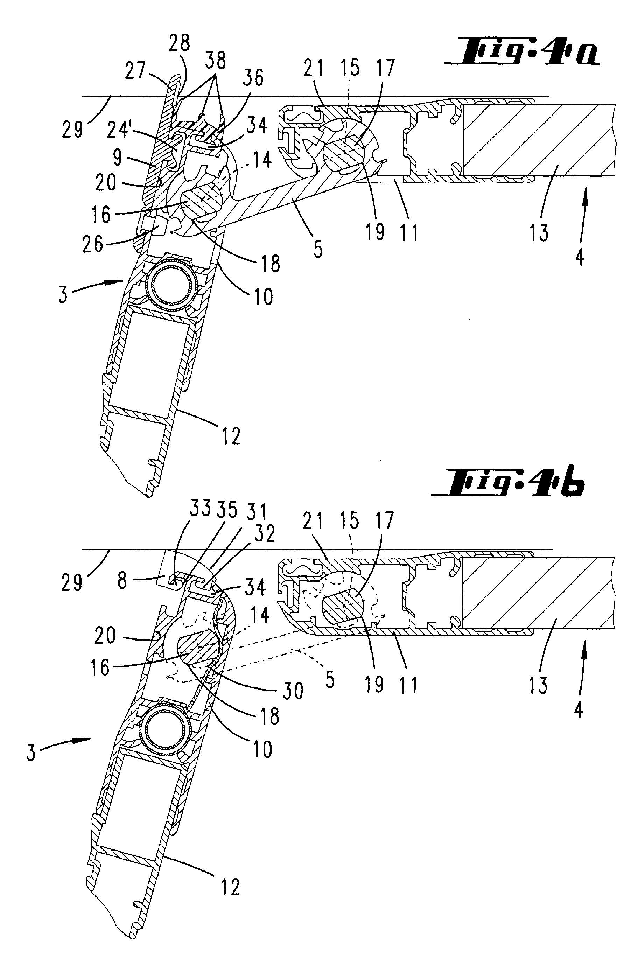

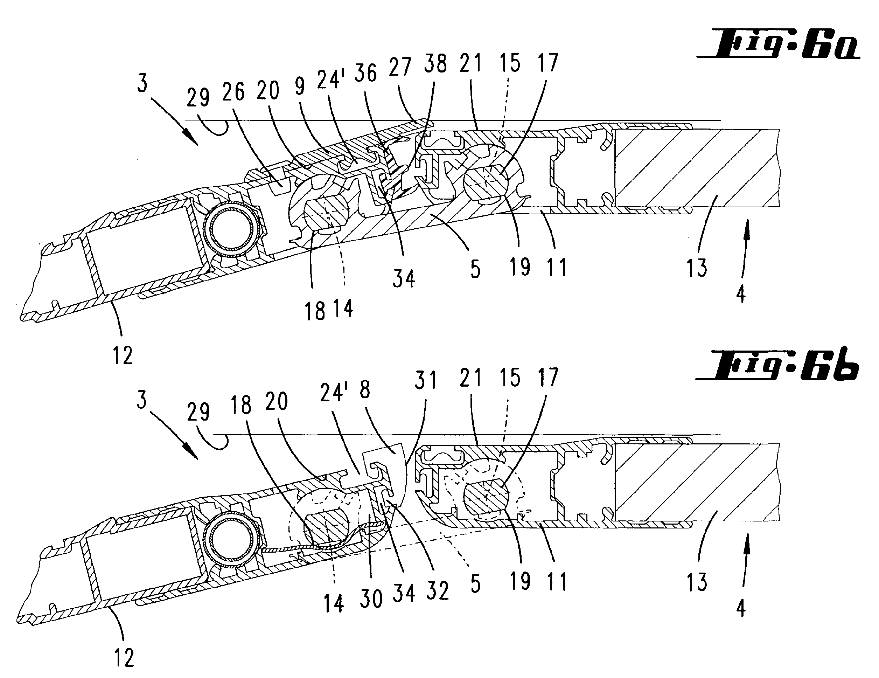

Die Fig. 3a bis 7a bzw. 3b bis 7b zeigen weitere Schnittansichten der Laderaumtüren 3, 4, wobei ein Schließvorgang der in den Fig. 2a, 2b geöffneten Laderaumtür 3 in verschiedenen Winkelstellungen dargestellt wird. Ausgehend von den Fig. 2a, 2b wird eine Verdrehung des Scharnierteils 5 um die Drehachse 14 durch die Anlage gegen die Flachfeder 30 erschwert, so dass bei einer Schließbewegung der Laderaumtür 3 zunächst nur eine Verdrehung des Scharnierteils 5 um die Drehachse 15 erfolgt. In der in den Fig. 3a, 3b eingetragenen Stellung der Laderaumtür 3 kommt es durch die Schließbewegung zu einer Anlage der Randfläche 31 des Nockens 8 gegen die Führungsfläche 29 seitlich des Ladebodens 7, wobei eine seitliche Verschiebung ermöglicht ist. Eine weitere Schließbewegung der Laderaumtür 3 führt daher, wie in den nachfolgenden Fig. dargestellt, zu einer Verdrehung des Scharnierteils 5 um beide Drehachsen 14 und 15. Wie den Fig. 4a bis 7a zu entnehmen ist, tritt dabei das Dichtelement 36 in den Türspalt 39 ein, wobei eine dichtende Anlage der Dichtlippen 38 an der Stirnwand 23 erfolgt. Zugleich ist in Fig. 7a eine Anlage der Anlageleiste 28 gegen die Innenwand 21 der Laderaumtür 4 erreicht. Wie aus einem Vergleich der Fig. 6a und 7a zudem deutlich wird, ist durch die Abstützung der Anlageleiste 28 an der Innenwand 21 zugleich eine Ausrichtung bzw. Einebnung der Innenwandungen 20 und 21 erreicht. Der symbolisch angedeutete Innendruck P durch ein Schüttgut wird durch die Abstützung gleichmäßig auf die Laderaumtüren 3 und 4 verteilt. Indem die Übergreifwand 9 mit dem Überdeckungsabschnitt 27 den Türspalt 39 und einen Bereich der Innenwand 21 überdeckt, wird außerdem eine Fugenbildung im Bereich des Türspaltes 39 vermieden, so dass sich das zeichnerisch nicht dargestellte Schüttgut in eine Entladerichtung E problemlos, d. h. bei geringen Entladezeiten aus dem Kastenaufbau entfernen lässt.

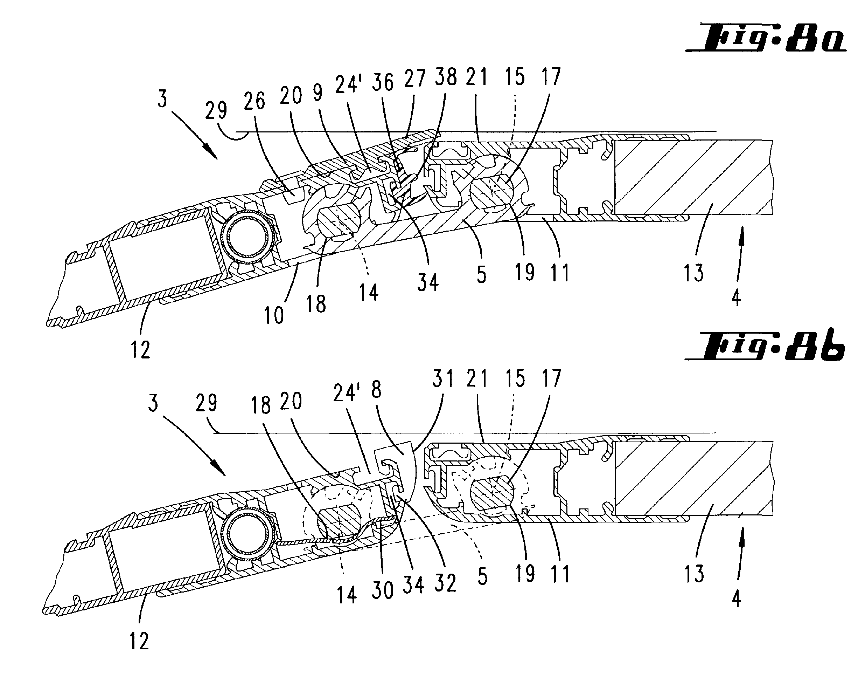

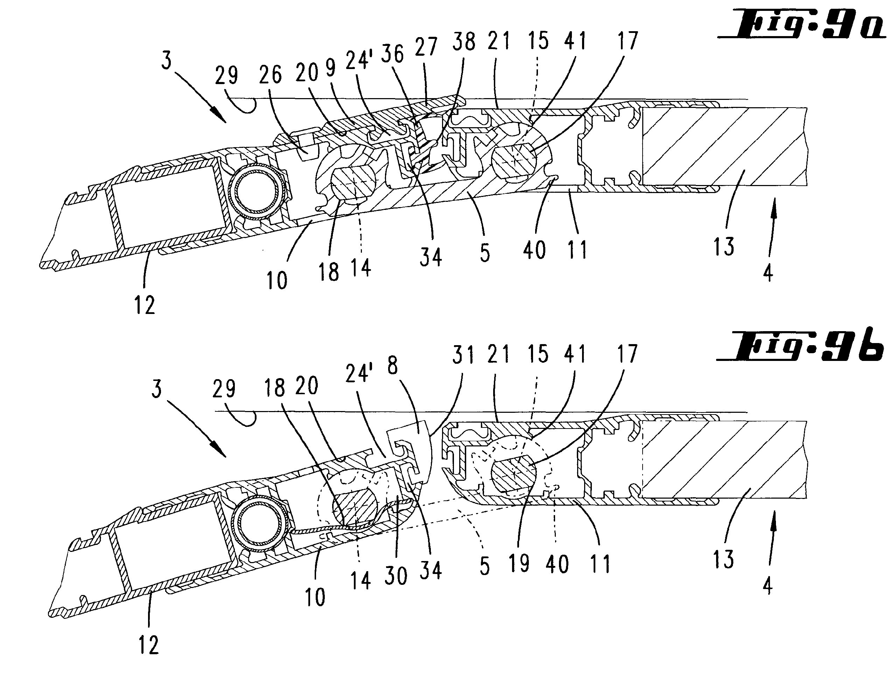

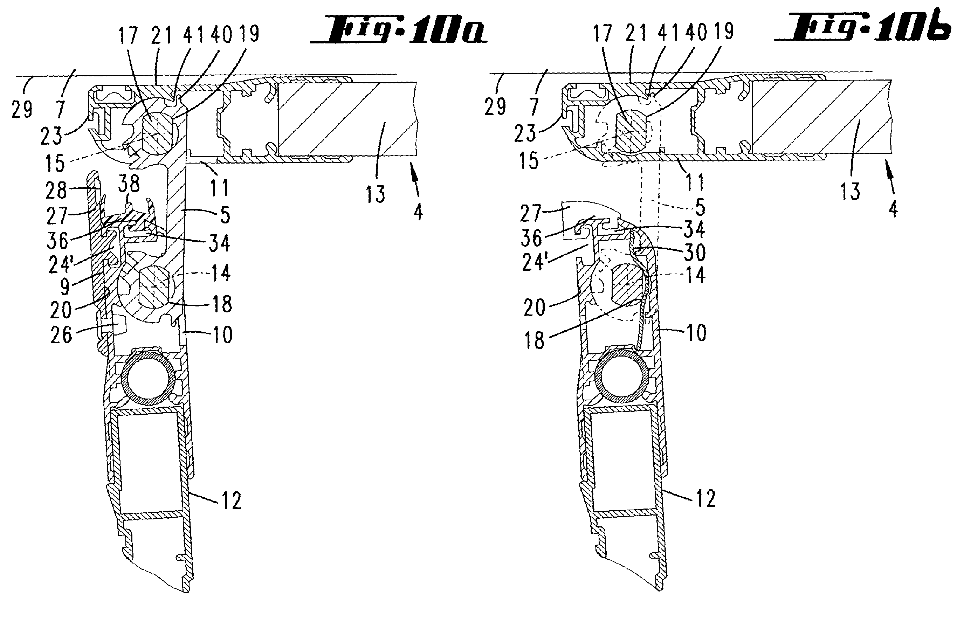

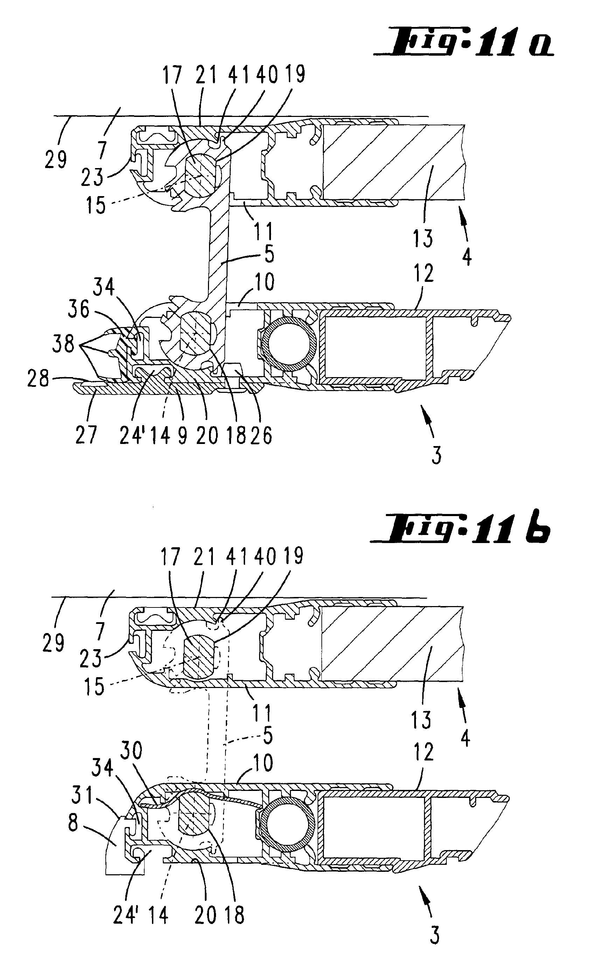

Die Fig. 8a bis 11a zeigen einen Teilschnitt entlang der Schnittlinie VIIa-VIIa, und die Fig. 8b bis 11b zeigen einen Teilschnitt entlang der Schnittlinie VIIb-VIIb in Fig. 1, wobei sich die Figuren wiederum durch verschiedene Positionen der Laderaumtür 3 unterscheiden. Ausgehend von der in den Fig. 7a, 7b dargestellten Verschließstellung der Laderaumtüren wird jedoch in den Fig. 8a bis 11a bzw. 8b bis 11b ein Öffnungsvorgang der Laderaumtür 3 mit schrittweise zunehmendem Öffnungswinkel gezeigt. Anhand der Darstellungen der Fig. 8b bis 11b wird deutlich, dass durch die an dem unrunden Achskörper 16 anliegende Flachfeder 30 zunächst eine alleinige Verdrehung des Scharnierteils 5 um die Drehachse 15 erfolgt. Wie beispielsweise auch Fig. 9a zu entnehmen ist, besteht dabei in Verdrehrichtung ein Abstand zwischen einem Vorsprung 40 des Scharnierteils 5 und einem Anschlag 41 des Randprofils 11. Auch bei einer weiteren Öffnungsbewegung der Laderaumtür 3 erfolgt eine ausschließliche oder zumindest überwiegende Verdrehung des Scharnierteils 5 um die Drehachse 15 bis in der in Fig. 10a bzw. 10b dargestellten Position der Laderaumtür 3 der Vorsprung 40 gegen den Anschlag 41 in eine Anlage tritt. Bei der nachfolgenden Öffnungsbewegung bis zu der in den Fig. 11a, 11b gezeigten Position erfolgt demzufolge eine ausschließliche Verdrehung des Scharnierteils 5 um die Drehachse 14. Zusammenfassend wird somit bei den mit Bezug auf die in den Figuren beschriebenen Laderaumtüren 3, 4 sowohl bei einem Verschließ- wie auch bei einem Öffnungsvorgang der Laderaumtür 3 eine bestimmte, für die Anlage der Übergreifwand 9 und des Dichtelementes 36 vorteilhafte Verdrehfolge des Scharnierteils 5 um die beiden Drehachsen 14 und 15 eingehalten. Ebenso wird durch die vorgegebene Verdrehfolge beim Öffnen und Schließen ein reibungsloser Bewegungsablauf der Laderaumtüren sichergestellt.

Alle offenbarten Merkmale sind erfindungswesentlich. In die Offenbarung der Anmeldung wird hiermit auch der Offenbarungsinhalt der zugehörigen/beigefügten Prioritätsunterlagen (Abschrift der Voranmeldung) vollinhaltlich mit einbezogen, auch zu dem Zweck Merkmale dieser Unterlagen in Ansprüche vorliegender Anmeldung mit aufzunehmen.

## Patentansprüche

1. Laderaumtür an einem Kastenaufbau eines Lastkraftwagens mit einer dem Laderaum in Verschlussposition zugewandten Innenwand, einer Außenwand und Stirnwänden, wobei die Laderaumtür an einer Stirnwand einer anschließenden Laderaumtür oder einer Runge, ggf. unter Scharnierverbindung, jedenfalls aber unter Ausbildung eines ggf. dichtungsverschlossenen Türspalts angeordnet ist, **dadurch gekennzeichnet, dass** an der Innenwand (20) der Laderaumtür (3) eine den Türspalt (39) übergreifende und einen Teilbereich der weiteren Laderaumtür (4) oder der Runge überdeckende Übergreifwand (9) befestigt ist.

2. Laderaumtür nach Anspruch 1 oder insbesondere danach, **dadurch gekennzeichnet, dass** die Scharnierverbindung ein um zwei Drehachsen (14, 15) drehbares Scharnierteil 5 aufweist.

3. Laderaumtür nach einem oder beiden der vorhergehenden Ansprüche oder insbesondere danach, **dadurch gekennzeichnet, dass** die Übergreifwand (9) als Strangprofil, insbesondere als Strangpressprofil aus einem Aluminium-Werkstoff ausgebildet ist.

4. Laderaumtür nach einem oder mehreren der vorhergehenden Ansprüche oder insbesondere danach, **dadurch gekennzeichnet, dass** die Übergreifwand (9) in einem zu einer Haupterstreckungsrichtung senkrechten Querschnitt einen Fortsatz 24 aufweist, der formschlüssig, insbesondere schwalbenschwanzartig, in eine Ausnehmung (24') an der Laderaumtür (3) eingreift.

5. Laderaumtür nach einem oder mehreren der vorhergehenden Ansprüche oder insbesondere danach, **dadurch gekennzeichnet, dass** die Laderaumtür (3) ein Randprofil (10) aufweist und dass die Ausnehmung (24'), in welche der Fortsatz (24) eingreift, an dem Randprofil (10) ausgebildet ist.

6. Laderaumtür nach einem oder mehreren der vorhergehenden Ansprüche oder insbesondere danach, **dadurch gekennzeichnet, dass** das Randprofil (10) der Laderaumtür (3) als Strangpressprofil aus einem Aluminium-Werkstoff ausgebildet ist.

7. Laderaumtür nach einem oder mehreren der vorhergehenden Ansprüche oder insbesondere danach, **dadurch gekennzeichnet, dass** die Übergreifwand (9) einen Befestigungsabschnitt (23) aufweist, der sich im Wesentlichen parallel zu einem Bereich der Innenwand (20) der Laderaumtür (3) erstreckt.

8. Laderaumtür nach einem oder mehreren der vorhergehenden Ansprüche oder insbesondere danach, **dadurch gekennzeichnet, dass** der Befestigungsabschnitt (23) an der Innenwand (20) der Laderaumtür (3) mit einem Befestigungselement wie einer Schraube, Niete (26) oder dergleichen oder durch eine Verklebung, Verschweißung oder dergleichen befestigt ist.

9. Laderaumtür nach einem oder mehreren der vorhergehenden Ansprüche der insbesondere danach, **dadurch gekennzeichnet, dass** an der anschließenden Laderaumtür (4) eine weitere Innenwand (21) und ein weiteres Randprofil (11), das als Strangpressprofil aus einem Aluminium-Werkstoff ausgebildet ist, vorgesehen sind.

10. Laderaumtür nach einem oder mehreren der vorhergehenden Ansprüche oder insbesondere danach, **dadurch gekennzeichnet, dass** an der Runge eine weitere Innenwand vorgesehen ist.

11. Laderaumtür nach einem oder mehreren der vorhergehenden Ansprüche oder insbesondere danach, **dadurch gekennzeichnet, dass** die Übergreifwand (9) einen Überdeckungsabschnitt (27) aufweist, durch den in einem Verschlusszustand der Laderaumtür (3) zumindest eine bereichsweise Überdeckung der weiteren Innenwand (21) gegeben ist.

12. Laderaumtür nach einem oder mehreren der vorhergehenden Ansprüche oder insbesondere danach, **dadurch gekennzeichnet, dass** die Übergreifwand (9) in dem Querschnitt im Wesentlichen T-förmig ausgestaltet ist.

13. Laderaumtür nach einem oder mehreren der vorhergehenden Ansprüche oder insbesondere danach, **dadurch gekennzeichnet, dass** in einem Verschlusszustand der Laderaumtür (3) eine Anlage des Überdeckungsabschnittes (27) an der weiteren Innenwand (21) gegeben ist.

14. Laderaumtür nach einem oder mehreren der vorhergehenden Ansprüche oder insbesondere danach, **dadurch gekennzeichnet, dass** an dem Überdeckungsabschnitt (27) eine Anlageleiste (28) angeordnet ist, welche vorzugsweise aus einem Kunststoff-Werkstoff, wie Polyamid, ausgebildet ist und dass in dem Verschlusszustand der Laderaumtür (3) eine Anlage der Anlageleiste (28) an der weiteren Innenwand (21) gegeben ist.

15. Laderaumtür nach einem oder mehreren der vorhergehenden Ansprüche oder insbesondere danach, **dadurch gekennzeichnet, dass** der Befestigungsabschnitt (25) und/oder der Überdeckungsabschnitt (27) in dem Querschnitt in Gestalt eines Steges mit einer Stegbreite und mit einer Steglänge ausgebildet sind, wobei die Steglänge ein Mehrfaches der Stegbreite beträgt und die Stegbreite bevorzugt in der Größenordnung von wenigen Millimetern liegt.

16. Laderaumtür nach einem oder mehreren der vorhergehenden Ansprüche oder insbesondere danach, **dadurch gekennzeichnet, dass** in dem Türspalt (39) ein Dichtelement (36) angeordnet ist, welches vorzugsweise an dem Randprofil (10) der Laderaumtür (3) befestigt ist.

17. Laderaumtür nach einem oder mehreren der vorhergehenden Ansprüche oder insbesondere danach, **dadurch gekennzeichnet, dass** an der Laderaumtür (3) im Bereich einer scharnierseitigen Stirnwand (22) ein Nocken (8) angeordnet ist und dass der Nocken (8) eine Randfläche (31) aufweist, welche in einer zu der scharnierseitigen Stirnwand (22) senkrechten Richtung über die scharnierseitige Stirnwand (22) übersteht.

18. Laderaumtür nach einem oder mehreren der vorhergehenden Ansprüche oder insbesondere danach, **dadurch gekennzeichnet, dass** an dem Kastenaufbau (2) in einem Randbereich der Türöffnung eine Anlage- bzw. Führungsfläche (29) ausgebildet ist und dass bei bestimmten Paarungen von Verdrehwinkeln des Scharnierteils (5) um die beiden Drehachsen (14, 15) eine Anlage der Randfläche (31) des Nockens (8) an der Führungsfläche (29) gegeben ist.

19. Laderaumtür nach einem oder mehreren der vorhergehenden Ansprüche oder insbesondere danach, **dadurch gekennzeichnet, dass** an der Laderaumtür (3) drehbar ein sich in Richtung der türseitigen Drehachse (14) erstrekkender und drehsteif mit dem Scharnierglied (5) verbundener Achskörper (16) angeordnet ist, welcher einen unrunden Querschnitt aufweist und an einem türseitig befestigten Federelement anliegt, wobei das Federelement durch den Achskörper (16) eine von einem Drehwinkel zwischen dem Achskörper (16) und der Laderaumtür (3) abhängige Verformung erfährt.

20. Laderaumtür nach einem oder mehreren der vorhergehenden Ansprüche oder insbesondere danach, **dadurch gekennzeichnet, dass** das Federelement als Flachfeder (30) mit einer Flachseite ausgebildet ist und dass es mit der Flachseite an dem Achskörper (16) anliegt.
